# DEMANDE DE BREVET EUROPEEN

(11) **EP 4 213 345 A1**
(43) Date de publication de la demande: **19.07.2023**
(21) Numéro de dépôt: 23151340.9
(22) Date de dépôt: 12.01.2023
(51) Int. Cl.: H02K 1/18, H02K 5/04

(54) **EQUIPEMENT ÉLECTRIQUE À TOLÉRANCE THERMIQUE AMÉLIORÉE, ET VÉHICULE ASSOCIÉ**

(30) Priorité: 14.01.2022 FR 2200314
(71) Demandeur: ALSTOM Holdings, 93400 Saint-Ouen-sur-Seine (FR)
(72) Inventeur: RAGUIN, Bruno, 25290 ORNANS (FR); GUIGNIER, Gilles, 90000 BELFORT (FR); KEMPF, Antoine, 25110 PONT-LES-MOULINS (FR)
(74) Mandataire: Lavoix

(57) **Abrégé**

Un équipement électrique (20) comprend :
- un boitier (30) de protection comprenant une paroi circonférentielle (46) latérale réalisée en un premier matériau et deux flasques (48) d'extrémité, le boitier (30) délimitant un espace interne (32) défini autour d'un axe (A) central, et
- un stator (34) réalisé en au moins un deuxième matériau, disposé dans l'espace interne (32) autour de l'axe (A).

Le stator (34) comprend une pluralité de conduits (58) de fixation s'étendant parallèlement à l'axe (A) débouchant de part et d'autre du stator (34). L'équipement (20) comprend une pluralité de barreaux (44) s'étendant dans les conduits (58) et présentant des extrémités (64) fixées aux flasques (48). La paroi circonférentielle (46) présente au moins une fente (51) traversant toute une épaisseur de la paroi circonférentielle (46) et s'étendant d'un flasque (48) à l'autre.

## Description

La présente invention concerne un équipement électrique, notamment pour un véhicule, comprenant :
- un boitier de protection comprenant une paroi circonférentielle latérale réalisée en un premier matériau et deux flasques d'extrémité, le boitier délimitant un espace interne sensiblement cylindrique défini autour d'un axe central,
- un stator réalisé en au moins un deuxième matériau, disposé dans l'espace interne autour de l'axe.

L'invention concerne également un véhicule comprenant l'équipement électrique précédent.

Les équipements électriques tournants, comme les moteurs électriques ou les alternateurs, comprennent généralement un stator fixe et un rotor monté sur un arbre rotatif, disposés dans un boitier de protection également appelé carter.

Le stator est constitué d'un assemblage de feuillets métalliques magnétiques, notamment réalisé en métaux ferreux, par exemple en acier. Le boitier de protection est généralement réalisé en fonte, qui est un matériau avantageux en termes de durabilité et de coût de production.

Dans certains cas, afin d'améliorer la dissipation thermique dans l'espace interne du boitier, ainsi que pour réduire la masse de l'équipement, il est désirable de réaliser une partie du boitier, par exemple la partie circonférentielle, en métaux plus légers et meilleurs conducteurs thermiques, par exemple en alliage d'aluminium. La réduction de la masse totale de l'équipement est particulièrement pertinente dans le cas d'un moteur monté sur une structure mobile, comme par exemple un moteur de propulsion d'un véhicule.

Cependant, ces équipements peuvent se heurter à des problèmes de perte de fixation du stator au cours du fonctionnement, dus à la différence entre les coefficients de dilatation thermique entre les deux matériaux constituant respectivement le stator et les parois latérales du boitier.

En effet, le stator est habituellement maintenu en position dans le boitier par un serrage radial appliqué par les parois latérales. Or, les parois en alliage d'aluminium ont tendance à se dilater davantage que le stator en matériau ferreux lors de l'élévation de la température interne de l'équipement au cours de son fonctionnement. Il s'ensuit une perte du serrage du stator, ce qui peut entrainer une rotation du stator et/ou un décentrage, compromettant le fonctionnement et créant des risques d'accident.

Ainsi, un but de l'invention est de fournir un équipement électrique dont le boitier est constitué au moins en partie de matériaux allégés, permettant une bonne dissipation thermique et un assemblage simplifié de l'équipement, tout en garantissant la fixation et le centrage du stator au cours du fonctionnement.

A cet effet, l'invention a pour objet un équipement électrique du type précité, dans lequel le stator comprend une pluralité de conduits de fixation s'étendant parallèlement à l'axe débouchant de part et d'autre du stator,

l'équipement comprenant une pluralité de barreaux s'étendant dans les conduits et présentant des extrémités fixées aux flasques,

la paroi circonférentielle présentant au moins une fente traversant toute une épaisseur de la paroi circonférentielle et s'étendant d'un flasque à l'autre.

Un tel équipement permet de faire jouer aux barreaux le rôle de fixation du stator habituellement rempli par le boitier. Le boitier est alors dédié à la protection du stator et à la dissipation thermique, ce qui permet d'utiliser une structure moins rigide permettant de mieux s'adapter aux différences de dilatation thermique entre composants du moteur. La rigidité réduite des parois, obtenue par le matériau plus souple et la fente, permet de plus de faciliter l'assemblage de l'équipement.

Selon des modes de réalisation particuliers, l'équipement selon l'invention présente l'une ou plusieurs des caractéristiques suivantes, prise(s) isolément ou selon toute combinaison techniquement réalisable :
- pour chaque barreau, chaque flasque comprend une perforation débouchant en regard du conduit dans lequel s'étend le barreau, une des extrémités du barreau étant engagée dans la perforation ;
- l'équipement électrique comprend entre trois et six barreaux régulièrement répartis autour de l'axe, notamment quatre barreaux ;
- la fente s'étend sensiblement parallèlement à l'axe ;
- le boitier comprend un joint flexible disposé dans la fente ;
- la paroi circonférentielle est formée par au moins deux pièces distinctes assemblées par au moins un cordon de soudure externe s'étendant parallèlement à l'axe, notamment réalisé par un procédé de soudage par friction-malaxage ;
- la paroi circonférentielle est fabriquée par extrusion dans au moins une filière ;
- l'équipement est un moteur électrique comprenant un arbre disposé dans l'espace interne, mobile en rotation autour de l'axe, l'arbre portant un rotor magnétique ;
- le premier matériau présente un coefficient de dilatation thermique supérieur au coefficient de dilatation thermique du deuxième matériau.

L'invention concerne également un véhicule, notamment routier ou ferroviaire, comprenant un équipement tel que décrit ci-dessus.

L'invention sera mieux comprise à la lecture de la description qui suit, donnée uniquement à tire d'exemple et faite en référence aux dessins annexés, parmi lesquels :
- [Fig 1] la figure 1 est une vue de côté d'un véhicule selon un mode de réalisation de l'invention ;
- [Fig 2] la figure 2 est une vue en coupe longitudinale schématique d'un équipement électrique selon un premier mode de réalisation l'invention ;
- [Fig 3] la figure 3 est une vue en coupe transversale schématique de l'équipement de la figure 1 ; et
- [Fig 4] la figure 4 est une vue en coupe transversale schématique d'un équipement électrique selon un deuxième mode de réalisation de l'invention.

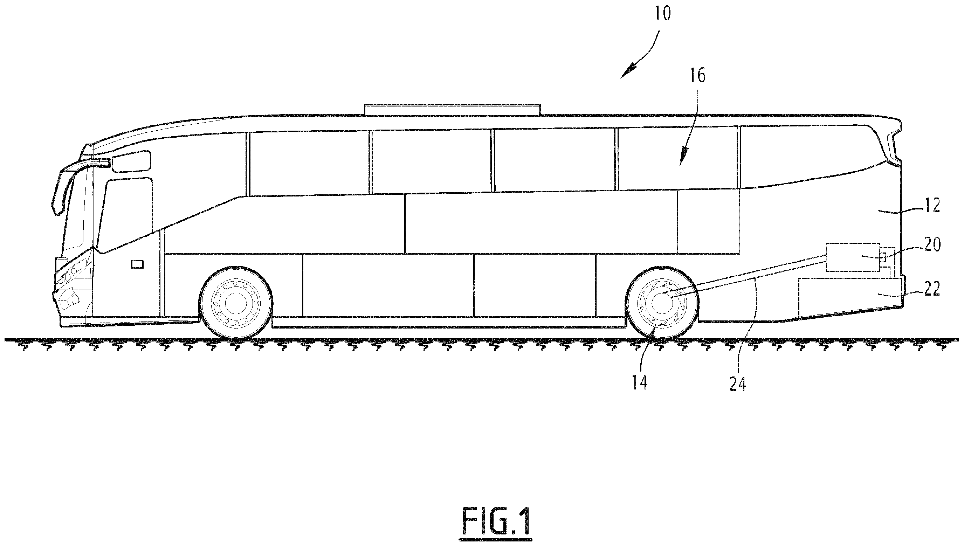

Un véhicule 10 est représenté sur la figure 1, comprenant une caisse 12 et des roues 14.

Le véhicule 10 est un véhicule de transport routier, destiné à accueillir des passagers dans un compartiment 16 défini par la caisse 12.

Le véhicule 10 est un véhicule à propulsion électrique, et comprend un moteur électrique 20, une batterie 22 alimentant le moteur électrique 20 et un dispositif de transmission 24 transmettant un couple moteur du moteur électrique 20 aux roues 14.

En variante, le véhicule 10 est un véhicule à propulsion hybride. Par « hybride », on entend que le véhicule 10 comprend au moins un moteur à explosion en plus du moteur électrique 20, les deux moteurs fonctionnant en alternance et/ou simultanément, en fonction des conditions de roulement.

En variante, le véhicule 10 est un véhicule ferroviaire, par exemple un véhicule de transport urbain ou péri-urbain, ou encore un train à moyenne ou grande vitesse.

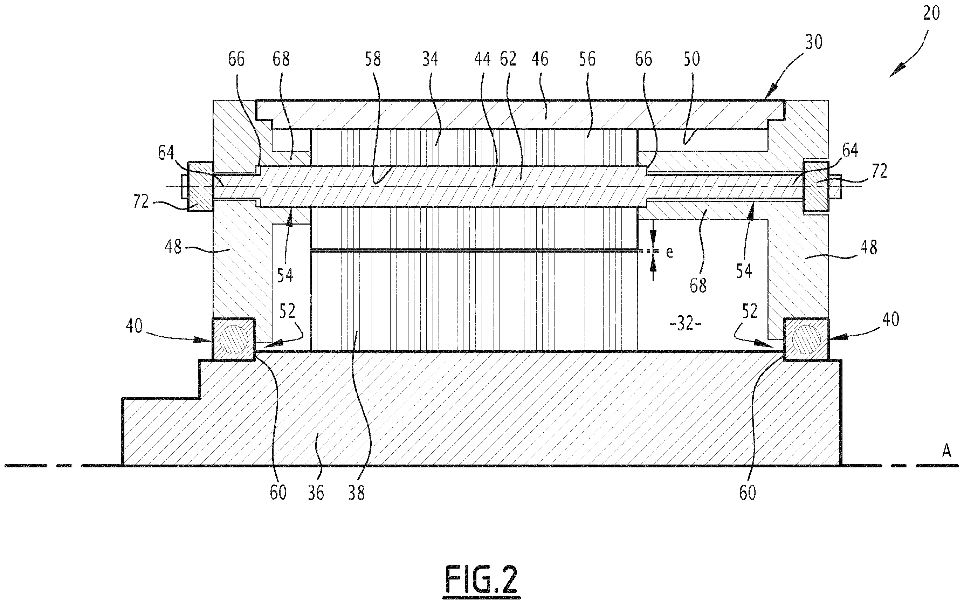

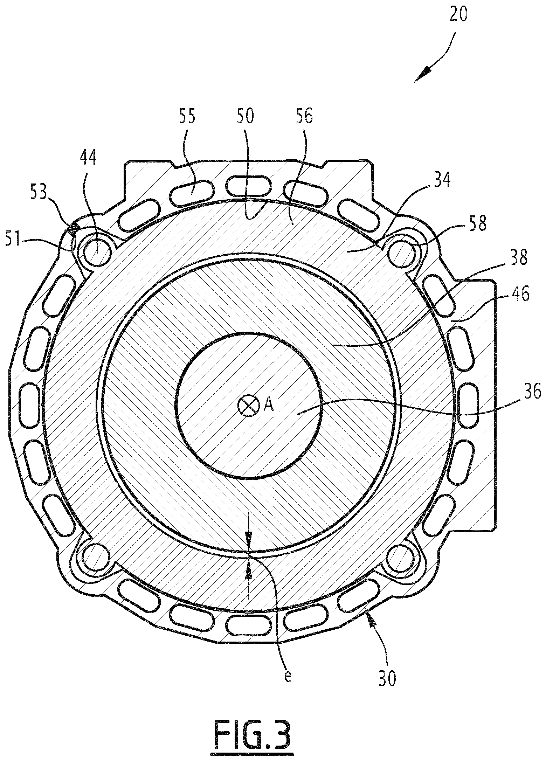

Le moteur électrique 20 est partiellement représenté sur les figures 2 et 3.

Le moteur électrique 20 comprend un boitier 30 de protection délimitant un espace interne 32 sensiblement cylindrique, ainsi qu'un stator 34 et un arbre 36 portant un rotor 38, contenus dans l'espace interne 32.

Le moteur électrique 20 comprend également des paliers de roulement 40 portant l'arbre 36 et une pluralité de barreaux 44 de fixation du stator 34 au boitier 30.

Le moteur électrique 20 est décrit ci-dessous en référence à un axe A définissant une direction axiale. L'axe A est l'axe central du cylindre formé par l'espace interne 32, et s'étend parallèlement à l'arbre 36, au centre de celui-ci.

Par les termes « axial » et « direction axiale », on entend ce qui est orienté sensiblement parallèlement à l'axe A.

Par le terme « radial » ou « direction radiale », on entend ce qui est orienté sensiblement perpendiculairement à l'axe A.

Dans l'exemple représenté, le moteur 20 est un moteur électrique synchrone.

Le boitier 30 comprend une paroi circonférentielle 46 latérale présentant une forme de coque annulaire autour de l'espace interne 32 cylindrique, sensiblement parallèle à la direction axiale, et deux flasques 48 d'extrémité fermant l'espace interne 32 aux deux extrémités, espacés l'un de l'autre selon la direction axiale.

Le boitier 30 est destiné à contenir le rotor 38 et le stator 34 et à les protéger de l'extérieur.

La paroi circonférentielle 46 présente une face interne 50 sensiblement cylindrique, s'étendant en regard de l'espace interne 32, et disposée en contact avec le stator 34.

La paroi circonférentielle 46 est réalisée en un premier matériau.

Le premier matériau est un matériau métallique qui présente une conduction thermique importante et une densité faible. Le premier matériau est par exemple un alliage d'aluminium.

Avantageusement, la paroi circonférentielle 46 est réalisée par extrusion dans une filière, avec une direction d'extrusion parallèle à l'axe A. Cela simplifie grandement la fabrication de la paroi circonférentielle 46.

Comme représenté sur la figure 3, la paroi circonférentielle 46 présente au moins une fente 51 traversant toute une épaisseur de la paroi circonférentielle 46 et s'étendant d'un flasque à l'autre. Par « traversant toute une épaisseur de la paroi circonférentielle », on entend que la fente 51 s'étend continûment entre l'espace interne 32 et l'extérieur du boitier 30.

La fente 51 s'étend par exemple sensiblement parallèlement à l'axe A.

En variante (non représentée), la fente 51 s'étend selon une direction formant un angle non nul avec l'axe A, et présente alors une forme sensiblement hélicoïdale.

La fente 51 est par exemple réalisée par fraisage dans la paroi circonférentielle 46.

La fente 51 réduit la rigidité de la paroi circonférentielle 46 et autorise des déformations plus importantes selon les directions radiales et orthoradiales. Cela permet au boitier 30 de mieux s'adapter à des déformations thermiques différentes entre le stator 34 et la paroi circonférentielle 46, comme expliqué plus bas.

Avantageusement, un joint 53 flexible est disposé dans la fente 51. Par « flexible », on entend que la raideur du matériau formant le joint 53 est négligeable par rapport à la raideur du premier matériau. Le joint 53 est par exemple réalisé en matériau polymère, et permet d'isoler l'espace interne 32 de l'extérieur sans augmenter de manière significative la rigidité de la paroi circonférentielle 46.

Avantageusement, la paroi circonférentielle 46 définit une pluralité de conduits 55 de refroidissement. Les conduits 55 s'étendent à travers la paroi circonférentielle 46, notamment parallèlement à l'axe A, sur toute la périphérie de la paroi circonférentielle 46.

Les conduits 55 permettent une circulation de fluide de refroidissement dans le boitier 30. Cela permet d'améliorer encore la dissipation thermique à travers la paroi circonférentielle 46, et réduit encore la masse totale du boitier 30. De plus, la fabrication par extrusion de la paroi circonférentielle 46 simplifie fortement la formation des conduits 55.

Chaque flasque 48 d'extrémité présente sensiblement une forme de disque plan, et présente une ouverture centrale 52 circulaire, centrée sur l'axe A, recevant un des paliers de roulement 40 et permettant le passage de l'arbre 36.

Chaque flasque 48 définit une pluralité de perforations 54 traversantes, par exemple quatre perforations, régulièrement réparties autour de l'axe A.

Les flasques 48 sont par exemple réalisés avec le premier matériau.

En variante, les flasques 48 sont réalisés avec un autre matériau, par exemple en fonte, en acier, ou en alliage d'acier.

Le stator 34 est monté dans l'espace interne, de manière fixe par rapport au boitier 30.

Le stator 34 est propre à générer un champ magnétique dans l'espace interne 32 afin d'entraîner le rotor 38 et l'arbre 36 en rotation.

Le stator 34 comprend un noyau magnétique 56, par exemple constitué d'un empilement de tôles feuilletées, qui permet l'interaction électromagnétique entre le rotor 38 et le stator 34.

Le stator 34 comprend de plus un enroulement électrique (non représenté), pour son alimentation.

Le stator 34 définit une pluralité de conduits 58 de fixation orientés selon la direction axiale A, qui s'étendent à travers le noyau magnétique 56.

Chaque conduit 58 est traversant et débouche de part et d'autre du noyau magnétique 56 selon la direction axiale en regard d'une des perforations 54. Le conduit 58 est propre à recevoir un des barreaux 44.

L'équipement 20 comprend avantageusement entre trois et six barreaux 44 répartis régulièrement autour de l'axe A et reçus dans les conduits 58, notamment quatre barreaux 44. Cela permet de mieux garantir le maintien et le centrage du stator 34.

Les tôles feuilletées s'étendent sensiblement perpendiculairement à l'axe central A.

Les tôles feuilletées sont par exemple assemblées entre elles par des cordons de soudure s'étendant sensiblement parallèlement à l'axe A.

Le noyau magnétique 56 est réalisé avec un deuxième matériau, présentant des propriétés ferromagnétiques, par exemple en acier.

Le noyau magnétique 56 est disposé en appui radial contre la face interne 50 de la paroi circonférentielle 46, dans des conditions normales de température et de pression. Par conditions normales, on entend une température sensiblement comprise entre 10°C et 30°C et une pression atmosphérique, c'est à dire proche de 1013 hPA.

Notamment, lors de l'assemblage du moteur 20, la paroi circonférentielle 46 est chauffée pour la dilater et augmenter le diamètre interne de la surface interne 50. Le noyau magnétique 56 est alors mis en place à froid dans la paroi circonférentielle 46, de manière à obtenir un bon contact une fois la paroi circonférentielle 46 refroidie à température ambiante.

La paroi circonférentielle 46 est avantageusement montée avec un serrage plus important que dans les moteurs électriques de l'état de la technique. La rigidité plus faible de la paroi circonférentielle 46, obtenue grâce à la fente 51, autorise ce niveau de serrage plus important sans risque accru de dégât matériel.

Le premier matériau et le deuxième matériau présentent des propriétés de dilatation thermique différentes l'un de l'autre.

Notamment, le deuxième matériau se dilate moins que le premier matériau lorsqu'ils sont soumis à des élévations de température comparables.

Le premier matériau présente un coefficient de dilatation thermique supérieur au coefficient de dilatation thermique du deuxième matériau.

Par exemple, le premier matériau présente un coefficient de dilatation thermique supérieur ou égal à 0,018 mm/m/°C, notamment supérieur ou égal à 0,022 mm/m/°C.

Par exemple, le deuxième matériau présente un coefficient de dilatation thermique inférieur ou égal à 0,016 mm/m/°C, notamment inférieur ou égal à 0,012 mm/m/°C.

L'espace interne 32 est par exemple susceptible de subir une élévation de température de 60°C à 120°C au-dessus de la température ambiante.

Lors d'une élévation de température dans l'espace interne 32, le noyau magnétique 56 et la paroi circonférentielle 46 se dilatent. Comme la paroi circonférentielle 46 est réalisée avec le premier matériau et que le noyau magnétique 56 est réalisé avec le deuxième matériau, ils se dilatent de manières différentes.

Cependant, le serrage plus important permis par la rigidité réduite de la paroi circonférentielle 46 conférée par la fente 51 permet de maintenir l'appui du noyau magnétique 56 sur la paroi circonférentielle 46. Le maintien du stator 34 en position est assuré par les barreaux 44.

L'arbre 36 est mobile en rotation par rapport au boitier 30 et au stator 34, autour de l'axe central A. L'arbre 36 est porté par les paliers de roulement 40, de sorte que son mouvement de rotation s'effectue avec des frottements réduits.

L'arbre 36 présente une forme sensiblement cylindrique dans l'espace interne 32, et définit deux épaulements 60 à ses extrémités engagées dans les paliers de roulement 40, de façon à bloquer les déplacements de l'arbre 36 selon la direction axiale.

Le rotor 38 comprend un ensemble de bobines reliées électriquement à un collecteur (non représentés), adaptées pour entraîner la rotation de l'arbre 36 sous l'effet d'un champ électrique généré par le stator 34.

En variante, le rotor 38 comprend une pluralité d'aimants permanents reliés au collecteur.

Le rotor 38 et le stator 34 sont séparés par un entrefer e.

Les paliers de roulement 40 comprennent par exemple des roulements à billes. Les paliers de roulement 40 sont disposés entre l'arbre 36 et les flasques 48, de manière à permettre la rotation de l'arbre 36 par rapport au boitier 30 avec des frottements réduits.

Chaque barreau 44 présente une partie médiane 62 et deux extrémités 64, opposées selon la direction axiale.

La partie médiane 62 s'étend dans le conduit 58, et les extrémités 64 sont fixées aux flasques 48.

Les extrémités 64 sont avantageusement filetées sur au moins une partie de leur longueur, et présentent des diamètres inférieurs à un diamètre de la partie médiane.

Avantageusement, chaque perforation 54 comprend un lamage 66 recevant partiellement la partie médiane du barreau 44. Cela permet un meilleur maintien du barreau 44.

Avantageusement, chaque flasque 48 comprend des manchons 68 prolongeant chaque perforation 54 et définissant les lamages 66. Les manchons reçoivent alors les extrémités 64 des barreaux 44 ainsi qu'une fraction de la partie médiane 66.

Chaque manchon 68 vient en appui contre le noyau magnétique 56 de manière à maintenir le noyau magnétique en place selon la direction axiale, et à maintenir les tôles magnétiques serrées ensemble.

Chaque barreau 44 reçoit deux organes de serrage 72 engagés sur les parties filetées des extrémités 64, en appui sur les flasques 48 sur des côtés opposés au stator magnétique 56.

Par exemple, les organes de serrage 72 sont des écrous présentant un diamètre externe plus grand que le diamètre interne de la perforation, de sorte que l'écrou est en appui contre le flasque 48, selon la direction axiale. Cela permet un assemblage simplifié des barreaux 44.

En variante, les extrémités 64 présentent des trous filetés taraudés s'étendant selon la direction axiale, depuis l'extrémité 64 en direction de la partie médiane 62. Les organes de serrage 72 sont alors des vis engagées dans les trous filetés, chaque vis comprenant une tête de diamètre externe plus grand qu'un diamètre interne de la perforation 54, de sorte que la tête de vis est en appui contre le flasque 48, selon la direction axiale.

En variante, les extrémités 64 des barreaux 44 ne sont pas filetées, et sont directement fixées aux flasques 48 par exemple par soudage.

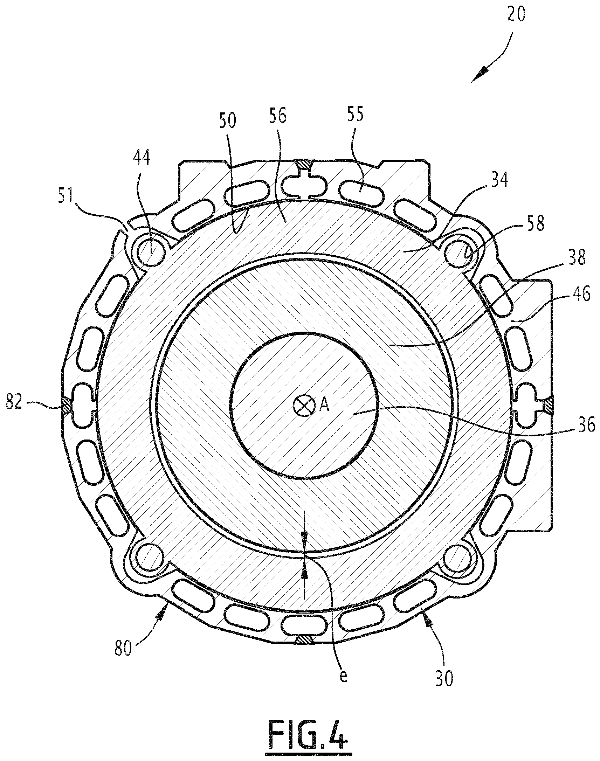

Selon un deuxième mode de réalisation représenté sur la figure 4, la paroi circonférentielle 46 comprennent au moins deux pièces 80 séparées assemblées par au moins un cordon de soudure externe 82.

Les pièces 80 sont disposées angulairement tout autour de l'axe A, de manière à former la paroi circonférentielle 46.

Chaque cordon de soudure externe 82 s'étend parallèlement à l'axe A, entre deux pièces 80 de la paroi circonférentielle 46.

La fente 51 est formée entre deux pièces 80, qui ne sont pas jointes par un cordon de soudure externe 82 à cet endroit.

Les cordons de soudure externes 82 sont notamment réalisés par un procédé de soudage par friction-malaxage.

La réalisation de la paroi circonférentielle 46 en plusieurs pièces séparées est rendue possible par la flexibilité plus importante permise pour la paroi circonférentielle 46, et simplifie grandement la réalisation du boitier 30.

Selon un autre mode de réalisation, le moteur 20 est un moteur asynchrone. Le rotor 38 comprend alors un ensemble de barres et d'anneaux formant une cage, connue sous le nom de cage d'écureuil.

Selon un autre mode de réalisation, le moteur électrique 20 n'est pas un moteur de propulsion d'un véhicule, mais un moteur électrique statique, notamment un moteur industriel.

Selon un autre mode de réalisation, l'équipement électrique selon l'invention n'est pas un moteur électrique 20 tel que décrit ci-dessus, mais un autre type d'équipement électrique comprenant un boitier de protection contenant un stator magnétique et un rotor monté sur un arbre en rotation.

Par exemple, l'équipement électrique est un alternateur, dont l'arbre est entraîné par une turbine, et dans lequel l'interaction entre le rotor et le stator produit une puissance électrique.

L'équipement électrique 20 selon l'invention permet d'utiliser un matériau plus léger et meilleur conducteur thermique pour réaliser le boitier de protection, tout en présentant une résistance améliorée aux dilatations thermiques, notamment celles résultant de son fonctionnement.

Il assure le centrage du stator malgré ces différences de dilatation thermiques, ce qui réduit les risques de perte d'efficacité et d'accidents, et améliore la durabilité du moteur dans le temps.

## Revendications

1. Equipement électrique (20), notamment pour un véhicule, comprenant :
- un boitier (30) de protection comprenant une paroi circonférentielle (46) latérale réalisée en un premier matériau et deux flasques (48) d'extrémité, le boitier (30) délimitant un espace interne (32) sensiblement cylindrique défini autour d'un axe (A) central,
- un stator (34) réalisé en au moins un deuxième matériau, disposé dans l'espace interne (32) autour de l'axe (A),
**caractérisé en ce que** le stator (34) comprend une pluralité de conduits (58) de fixation s'étendant parallèlement à l'axe (A) débouchant de part et d'autre du stator (34),
l'équipement (20) comprenant une pluralité de barreaux (44) s'étendant dans les conduits (58) et présentant des extrémités (64) fixées aux flasques (48),
la paroi circonférentielle (46) présentant au moins une fente (51) traversant toute une épaisseur de la paroi circonférentielle (46) et s'étendant d'un flasque (48) à l'autre.

2. Equipement électrique (20) selon la revendication 1, dans lequel, pour chaque barreau (44), chaque flasque (48) comprend une perforation (54) débouchant en regard du conduit (58) dans lequel s'étend le barreau (44), une des extrémités (64) du barreau (44) étant engagée dans la perforation (54).

3. Equipement électrique (20) selon la revendication 1 ou 2, dans lequel l'équipement électrique (20) comprend entre trois et six barreaux (44) régulièrement répartis autour de l'axe (A), notamment quatre barreaux (44).

4. Equipement électrique (20) selon l'une quelconque des revendications 1 à 3, dans lequel la fente (51) s'étend sensiblement parallèlement à l'axe (A).

5. Equipement électrique (20) selon l'une quelconque des revendications 1 à 4, dans lequel le boitier (30) comprend un joint (53) flexible disposé dans la fente (51).

6. Equipement électrique (20) selon l'une quelconque des revendications 1 à 5, dans lequel la paroi circonférentielle (46) est formée par au moins deux pièces (80) distinctes assemblées par au moins un cordon de soudure externe (82) s'étendant parallèlement à l'axe (A), notamment réalisé par un procédé de soudage par friction-malaxage.

7. Equipement électrique (20) selon l'une quelconque des revendications 1 à 6, dans lequel la paroi circonférentielle (46) est fabriquée par extrusion dans au moins une filière.

8. Equipement (20) selon l'une quelconque des revendications 1 à 7, dans lequel l'équipement (20) est un moteur électrique comprenant un arbre (36) disposé dans l'espace interne (32), mobile en rotation autour de l'axe (A), l'arbre portant un rotor (38) magnétique.

9. Equipement (20) selon l'une quelconque des revendications 1 à 8, dans lequel le premier matériau présente un coefficient de dilatation thermique supérieur au coefficient de dilatation thermique du deuxième matériau.

10. Véhicule (10), notamment routier ou ferroviaire, comprenant un équipement (20) selon l'une quelconque des revendications 1 à 9.
